# EUROPEAN PATENT APPLICATION

(11) **EP 1 736 947 A1**
(43) Date of publication of application: **27.12.2006**
(21) Application number: 05253562.2
(22) Date of filing: 09.06.2005
(51) Int. Cl.: G07G 1/12, G07F 19/00

(54) **Personalized security method for a self-service checkout system**

(71) Applicant: NCR International, Inc., Dayton, Ohio 45479 (US)
(72) Inventor: Kirkley, Adam James, Suwanee, Georgia 30024 (US)
(74) Representative: Williamson, Brian

(57) **Abstract**

A personalized security method for a self-service checkout system which sets security based on risk. The security method includes the steps of obtaining identification information of a customer involved in a transaction, determining a risk level associated with the identification information of the customer, determining a security level associated with the risk level, and configuring the self-service checkout system for the security level.

## Description

The present invention relates to transaction processing systems in supermarkets and other retail establishments, and more specifically to a personalized security method for a self-service checkout system.

Self-service checkout systems treat all customers the same. All customers are bound to one set of security rules. A single strict set of rules thoroughly scrutinizes even the most honest of customers, causing a slow down in the operation of the self-service checkout system.

Therefore, it would be desirable to provide a security method which considers individual differences to set security rules.

In accordance with the present invention, a personalized security method for a self-service checkout system is provided. The security method includes the steps of obtaining identification information of a customer involved in a transaction, determining a risk level associated with the identification information of the customer, determining a security level associated with the risk level, and configuring the self-service checkout system for the security level.

Embodiments of the present invention will now be described, by way of example, with reference to the accompanying drawings,in which:
Fig. 1 is a block diagram of a transaction system; and
Fig. 2 is a flow diagram illustrating the security method of the present invention.

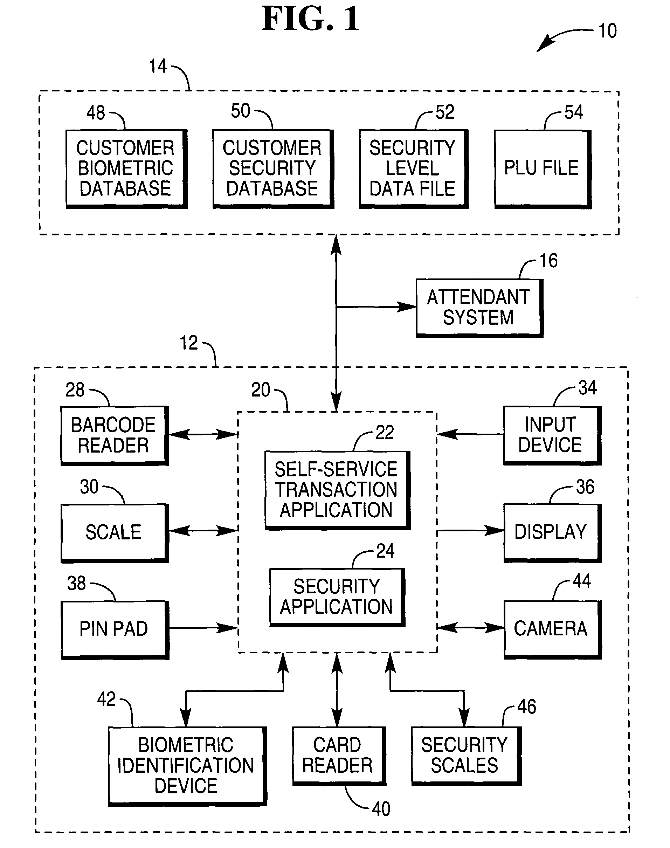

Referring to Fig. 1, transaction system 10 includes self-service computer system 12, server 14, and attendant system 16.

Self-service computer system 12 includes processor 20, which executes self-service transaction application 22. Self-service transaction application 22 displays instructions directed to completing a self-service transaction on display 36. Self-service transaction application 22 also receives customer selections through input device 34.

Display 36 may include a liquid crystal display. Input device 34 may include a keyboard or touch panel. Display 36 and input device 34 may be combined into a touch screen.

Self-service transaction application 22 processes items for sale. Self-service transaction application 22 obtains item identification information from barcode reader 28. Self-service transaction application 22 obtains weight information of produce items from scale 30. Finally, self-service transaction application 22 obtains price information from price look-up (PLU) file 54 or other price database.

Processor 20 also executes security application 24. security application 24 controls security at self-service computer system 12.

For example, security application 24 controls the number and complexity of weight checks using security scales 46. Weights of items can be stored in PLU file 54, or an independent weight database in self-service computer system 12 or server 14.

As another example, security application 24 may control processing of images captured by camera 44. Such images reveal hand positions and motions during scanning and bagging. Other security measures may include recognising the packaging of the item by colour or other visual characteristics, like size - height, width, length.

Security application 24 obtains customer identification information from customers using card reader 40, biometric identification device 42, or camera 44, barcode reader 28, or from keyed in data via the input device 34 or personal identification number (PIN) pad 38.

A customer may swipe a loyalty card or other type of identification card through card reader 42. Card reader 42 obtains customer identification information from the loyalty card and passes it to security application 24.

Alternatively, a customer may provide a fingerprint, iris image, face image, or other biometric data to biometric identification device 42. Security application 24 looks up the biometric information in a customer biometric database 48 to identify the customer.

A customer may scan a barcode label containing customer identification information. Security application 24 obtains the customer identification from barcode reader 28.

Finally, customers may be asked to key in their customer identification information. Security application 24 obtains the customer identification from input device 34 or PIN pad 38.

Security application 24 maintains customer security database 50 which contains shopping histories and risk levels for customers. Shopping history data may include data such as customer age, average cart size, number of uses of self-service checkout system 12, average number of attendant interventions at self-service checkout system 12, payment history, restricted item purchases, frequent shopper standing, and many other details.

The risk associated with each customer is individually determined and dynamically maintained after each transaction. Risk levels are assigned based upon the shopping history data for each customer, including shopping history data from a current transaction.

Customers are categorised by risk level. Risk levels may be determined by categorising customers based upon a comparison of their customer shopping history data with the defined categories of shoppers. Once categorised, customers are assigned the risk levels of the categories they are in.

Each risk level has a corresponding security level. A mapping of risk levels to security levels is contained in security level data file 52, which may include a lookup table.

Security levels dictate what security measures must be taken. Lower security levels require fewer security measures or less rigorous security measures, while higher security levels require more security measures or more rigorous security measures.

During each transaction, security application 24 uses the customer identification information to look up the customer's risk level in customer security database 50. Security application 24 uses the customer's risk level to find a corresponding security level in security level data file 52. Security application 24 then configures self-service checkout system 12 for the determined security level.

For example, suppose a customer has been categorised as risk level three on a scale of one to ten. Suppose this customer would be allowed a wider variance in terms of item identification. This would result in fewer times the customer would be stopped for cashier approval. Age restricted items may be approved once by the cashier at the end of a transaction, so as not to interfere with the rest of the item sales. This level three customer may also have all credit card transactions under $100 (a configurable amount) automatically or locally approved.

As another example, suppose a customer has been categorised as risk level eight on a scale of one to ten. This customer may have very strict rules applied for item identification resulting in more cashier interventions. An age-restricted item for this customer may immediately halt the transaction and require approval before any more items are sold. When using credit cards, a cashier may be required for signature verification.

Server 14 stores customer security data 48, security level data file 52, and PLU file 54. These files may also be stored locally in self-service checkout system 12.

Attendant station 16 is operated by an attendant who assists customers and watches for security violations. In a typical store, there is one attendant station 16 for every four self-service checkout systems 12.

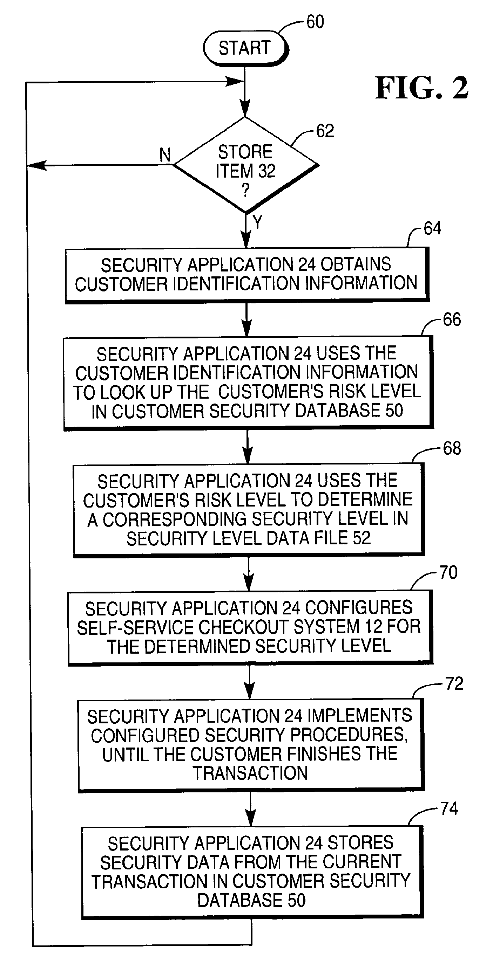

Turning now to Fig. 2, operation of security application 24 is illustrated in more detail beginning with start 60.

In step 62, security application 24 waits for a customer. If a customer begins use of self-service transaction application 22 through input device 34, operation proceeds to step 64.

In step 64, security application 24 obtains customer identification information. If the customer uses a loyalty card or other identification card, security application 24 obtains the identification information from card reader 40. If the customer provides biometric data, security application 24 obtains the identification information from biometric identification device 42 and customer biometric database 48. If the customer uses a barcode label, security application 24 obtains the identification information from barcode reader 28. Finally, if the customer keys in the identification information, security application 24 obtains the identification information from input device 34 or PIN pad 38.

In step 66, security application 24 uses the customer identification information to look up the customer's risk level in customer security database 50.

In step 68, security application 24 uses the customer's risk level to determine a corresponding security level in security level data file 52.

In step 70, security application 24 configures self-service checkout system 12 for the determined security level.

In step 72, security application 24 implements configured security procedures, until the customer finishes the transaction.

In step 74, security application 24 stores security data from the transaction in customer security database 50.

Operation returns to step 62 to wait for another customer.

Although the present invention has been described with particular reference to certain preferred embodiments thereof, variations and modifications of the present invention can be effected within the scope of the following claims.

## Claims

1. A security method for a self-service checkout system comprising the steps of:
a) obtaining identification information of a customer involved in a transaction;
b) determining a risk level associated with the identification information of the customer;
c) determining a security level associated with the risk level; and
d) configuring the self-service checkout system for the security level.

2. A method as climed in claim 1, wherein step a) comprises the step of:
a-1) obtaining the identification information from a loyalty card carried by the customer.

3. A method as claimed in caim 1, wherein step a) comprises the steps of:
a-1) obtaining biometric data from the customer; and
a-2) determining that the identification information of the customer is associated with the biometric data of the customer.

4. A method as claimed in caim 1, wherein step b) comprises the steps of:
b-1) storing shopping history data of the customer; and
b-2) assigning a risk level based upon the shopping history data of the customer.

5. A method as claimed in caim 1, wherein step b) comprises the steps of:
b-1) storing shopping history data of the customer;
b-2) obtaining current transaction data of the customer; and
b-2) assigning a risk level based upon the shopping history data of the customer and the current transaction data of the customer.

6. A method as claimed in caim 1, wherein step b) comprises the steps of:
b-1) defining categories of shoppers of different risk levels;
b-2) storing shopping history data of the customer;
b-3) determining a category of the customer by comparing the shopping history data of the customer to the categories of shoppers; and
b-4) determining that the risk level is associated with the category of the customer.

7. A method as claimed in any preceding claim, wherein step c) comprises the steps of:
c-1) looking up the risk level of the customer in an established list of risk levels; and
c-2) determining that the security level of the customer is associated with the risk level of the customer in the list.

8. A method as claimed in any preceding claim, wherein step d) comprises the step of:
d-1) relaxing security for lower security levels.

9. A method as claimed in any preceding claim, further comprising the step of:
e) implementing configured security procedures for the security level until the customer leaves the self-service checkout system; and
f) storing data from the transaction in shopper history data of the customer.

10. A self-service checkout system comprising a security system, including a computer for obtaining identification information of a customer involved in a transaction, for determining a risk level associated with the identification information of the customer, for determining a security level associated with the risk level, and for configuring the self-service checkout system for the security level.
